Europäisches Patentamt

European Patent Office

Office européen des brevets

(19)

(11) Numéro de publication : **0 113 288**
**B1**

(12) **FASCICULE DE BREVET EUROPÉEN**

(45) Date de publication du fascicule du brevet :
12.11.86

(51) Int. Cl.⁴ : **A 23 K 1/22**, C 07 H 13/12

(21) Numéro de dépôt : **83402509.0**

(22) Date de dépôt : **22.12.83**

(54) **Produits à base de complexes d'urée et de matières à lactose hydrolysé, leur préparation et leur utilisation pour l'alimentation de ruminants.**

(30) Priorité : **29.12.82 FR 8222018**

(43) Date de publication de la demande :
**11.07.84 Bulletin 84/28**

(45) Mention de la délivrance du brevet :
**12.11.86 Bulletin 86/46**

(84) Etats contractants désignés :
**BE CH DE FR GB IT LI NL SE**

(56) Documents cités :
**FR-A- 2 249 623**
**FR-A- 2 466 958**
**US-A- 2 612 497**
**US-A- 2 681 858**
**US-A- 4 066 750**
**CHEMICAL ABSTRACTS, vol. 98, no. 7, 14 février 1983, pages 718,719, réf. no. 54365q, Columbus Ohio (US)**
**CHEMICAL ABSTRACTS, vol. 94, no. 21, 25 mai 1981, page 560, réf. no. 172954w, Columbus Ohio (US)**
**CHEMICAL ABSTRACTS, vol. 52, no. 7, 10 avril 1958, colonnes 5687f-5688d, Columbus Ohio (US)**

(73) Titulaire : **Corning Glass Works**
**Houghton Park**
**Corning New York 14831 (US)**

**SANDERS**
**17 quai de l'Industrie**
**F-91200 Athis-Mons (FR)**

(72) Inventeur : **Assoumani, Mohamed Bakri**
**D2 "Les Millepertuis" Avenue du Berry**
**F-91940 Les Ulis (FR)**
Inventeur : **Briend, Gérard**
**101 rue du 8 Mai 1945**
**F-91300 Massy (FR)**
Inventeur : **Palisse-Roussel, Maurice**
**8 avenue de la Pépinière**
**F-91390 Morsang sur Orge (FR)**
Inventeur : **Baret, Jean-Luc**
**16 Résidence "Les Cottages" Veneux les Sablons**
**F-77250 Moret/Loing (FR)**
Inventeur : **Alquier, Jean-Claude**
**39 rue Gambetta**
**F-78600 Mesnil le Roi (FR)**

(74) Mandataire : **de Boisse, Louis et al**
**CABINET DE BOISSE 37, Avenue Franklin D. Roosevelt**
**F-75008 Paris (FR)**

## Description

L'invention concerne des produits à base de complexes d'urée et de matières à lactose hydrolysé, leur préparation et leur utilisation pour l'alimentation de ruminants.

Il est bien connu d'incorporer de l'urée dans des aliments pour ruminants ; la quantité d'urée incorporable est toutefois limitée à quelques pour cents car l'urée se décompose dans le rumen de l'animal en donnant de l'ammoniac qui est toxique pour ce dernier.

Afin de pallier cet inconvénient, on a proposé de remplacer l'urée libre par certains complexes sucres-urées appelés, de manière générale, glycosyl urées, afin, notamment, d'éviter une décomposition notable de l'urée en ammoniac dans le rumen. On a ainsi proposé, notamment, des lactosyls urées (complexes de lactose et d'urée) (voir le brevet des Etats-Unis d'Amérique n° 4 267 314). Ces produits n'ont pas, toutefois, été utilisés en pratique pour des raisons économiques.

FR-A-2 249 623 concerne des aliments pour ruminants obtenus par réaction d'un composé azoté non protéinique, tel que l'urée, avec au moins un hydrate de carbone qui peut avoir été préalablement hydrolysé dans des conditions acides. Lesdits aliments sont formés principalement par la réaction de Maillard.

US-A-2 612 497 décrit un procédé de préparation d'uréides d'hexoses en condensant de l'urée avec un hexose ou un polysaccharide formant des hexoses dans les conditions réactionnelles, par chauffage en présence d'eau et d'un agent déshydratant, tel que l'acide sulfurique ou phosphorique.

Chemical Abstracts, vol. 98, pages 718-719, résumé n° 54365q décrit la synthèse de glycosylurées et de galactosylurées par réaction de lactose et d'urée, puis hydrolyse acide du produit obtenu.

Aucun de ces documents ne suggère d'utiliser comme matière de départ une matière lactosée préalablement hydrolysée en glucose et galactose, ni que l'emploi d'une telle matière de départ puisse conduire à un produit final à faible teneur en urée libre.

L'invention vise à fournir de nouveaux produits à base de complexes d'urée convenant à l'alimentation de ruminants qui présentent les avantages d'une haute teneur possible en urée et de ne laisser subsister qu'une faible proportion d'urée libre.

L'invention concerne de nouveaux produits complexes formés à partir d'urée et d'une matière lactosée dont le lactose est au moins partiellement hydrolysé en glucose et galactose.

Comme matières à lactose au moins partiellement hydrolysé, on peut utiliser des perméats de lactosérums ou des jus lactosés (obtenus par déprotéinisation des lactosérums) dont le lactose a été au moins partiellement hydrolysé, ainsi que les lactosérums dont le lactose a été au moins partiellement hydrolysé. Pour des raisons économiques on préfère à ce jour les perméats ou les jus lactosés à lactose au moins partiellement hydrolysé. Les matières à lactose hydrolysé peuvent être déminéralisées ou non. A ce jour, on préfère utiliser des matières non déminéralisées pour des raisons économiques. L'hydrolyse du lactose est, de préférence, réalisée par voie enzymatique, comme connu en soi, de préférence à l'aide d'enzymes immobilisés (lactase ou β-galactosidase). Ceci garantit la qualité des sucres obtenus et minimise donc les réactions de Maillard et la formation de sous-produits réactionnels. De préférence, ces nouveaux complexes contiennent 5 à 40 % en poids d'urée, en particulier 15 à 30 %.

De préférence, les nouveaux produits de l'invention sont utilisés sous forme de produits liquides concentrés. Ces produits sont homogènes, stables (absence de cristallisation) et faciles à manipuler. La forme liquide préférée permet de réaliser des économies de séchage et donc de minimiser les coûts. Toutefois, si désiré, on peut sécher lesdits produits jusqu'à siccité.

Les produits de l'invention se préparent facilement par dissolution de l'urée dans la matière lactosée à lactose au moins partiellement hydrolysé, de préférence à une température de 50-90 °C, spécialement de 60-80 °C, sous agitation ; si nécessaire, ajustement du pH dans la gamme de 2,5 à 4,5, de préférence au-dessous de 3, par addition d'acide à la solution obtenue ; et chauffage de la solution acide résultante à une température de 50-90 °C, de préférence 60-80 °C, pendant un temps suffisant pour que la teneur du produit résultant en urée libre n'excède pas 2 % en poids, de préférence 1,5 % en poids. La facilité de préparation semble être attribuable à une réactivité élevée du glucose et du galactose.

Selon un mode de réalisation préféré, on utilise de l'acide phosphorique $H_3PO_4$ pour effectuer le réglage du pH, lequel $H_3PO_4$ constitue un adjuvant avantageux fréquemment incorporé dans les aliments pour ruminants. La quantité de $H_3PO_4$ incorporée sera usuellement comprise entre 2 et 7 % en poids par rapport au total du produit selon l'invention. L'acide phosphorique peut être incorporé sous forme d'une solution aqueuse à 85 % en poids de $H_3PO_4$.

Les produits selon l'invention sont des additifs alimentaires utiles pour la préparation d'aliments pour ruminants, en particulier sous forme de granulés ou de liquides. Ils permettent, en effet, l'incorporation de matières azotées non protéiques dans les rations pour ruminants.

Par rapport au lactosyl-urée, ils présentent une plus grande teneur possible en urée, une plus grande facilité de préparation, l'absence de toute cristallisation et, surtout, une teneur extrêmement réduite en urée libre.

Les exemples suivants sont donnés en vue d'illustrer l'invention.

Exemple 1 et exemples comparatifs A, B et C

2

**0 113 288**

Cet exemple illustre la préparation d'un produit selon l'invention à partir de 20 % en poids d'urée et d'un perméat de lactosérum dont le lactose a été hydrolysé à 88,5 % par le moyen de β-galactosidase immobilisé. La composition et les propriétés de ce perméat à lactose partiellement hydrolysé étaient les suivantes :

| | | |
|---|---|---|
| pH | 3,86 | |
| couleur | 490 | IU |
| teneur en extrait sec | 59 | % |
| glucose | 21,57 | % |
| galactose | 21,57 | % |
| lactose résiduel | 5,62 | % |
| matières azotées totales (N × 6,38) | 2,00 | % |
| protéines vraies résiduelles | 0,18 | % |
| cendres (sels minéraux) | 5,10 | % |

On a dissous 60 g d'urée dans 300 g de perméat hydrolysé chauffé à 80 °C en agitant pendant 5 minutes. Après refroidissement à la température ambiante, on a réglé le pH à 2,5 par addition de 16,8 g d'une solution aqueuse de $H_3PO_4$ à 85 % en poids, puis on a chauffé le tout à 80 °C pendant 2 heures. On a mesuré la teneur en urée libre du produit initialement, après 15 minutes et après 2 heures de chauffage, par la méthode enzymatique à l'uréase.

A titre comparatif, on a également préparé (i) un produit A (complexe urée-$H_3PO_4$) en dissolvant à 80 °C, en agitant, 24 g d'urée dans 120 g d'eau, puis en ajustant le pH de la solution résultante à 2,5 par addition de 14,5 g de solution de $H_3PO_4$ à 85 % ; (ii) un produit B en dissolvant à 80 °C, en agitant, 40 g d'urée dans 239,5 g d'une solution aqueuse de lactose à 60 % en poids, puis en ajustant le pH de la solution résultante à 2,5 par ajout de 17 g de solution de $H_3PO_4$ à 85 % ; et (iii) un produit C en dissolvant à 80 °C, en agitant, 60 g d'urée dans 300 g d'un jus lactosé non hydrolysé puis en ajoutant le pH à 2,5 par ajout de 39,1 g de solution de $H_3PO_4$ à 85 %.

Ensuite, on a chauffé les produits A, B et C à 80 °C pendant 2 heures en mesurant la teneur en urée libre initialement, après 15 mn et après 2 h de chauffage, comme pour le produit de l'invention.

Les résultats obtenus sont résumés dans le Tableau I ci-dessous :

Tableau I

| | | A | B | C | Exemple 1 |
|---|---|---|---|---|---|
| Teneur en urée libre, % en poids | t = 0 | 15,14 | 13,54 | 15,04 | 15,92 |
| | t = 15mn | 9,03 | 10,76 | 10,37 | 1,37 |
| | t = 2h | 10,80 | 12,13 | 7,3 | 1,55 |
| Urée libre au bout de 2h/urée libre initiale, % | | 60–71 | 79–89 | 69–49 | 8,6–10 |
| Cristallisation au stockage | | – | abondante 2/3 en volume | | non |

Ces résultats montrent la supériorité flagrante du produit de l'invention des points de vue de la teneur réduite en urée libre et de l'absence de cristallisation (par rapport aux produits B et C). On voit également que la fixation de l'urée s'opère rapidement puisqu'il reste moins de 2 % en poids d'urée libre au bout de 15 mn de réaction.

Exemple 2

Cet exemple illustre la préparation de produits de l'invention contenant, respectivement, 10, 20, 30 et 40 % en poids d'urée. Ces produits sont préparés par un mode opératoire similaire à celui suivi dans l'Exemple 1. La quantité de perméat hydrolysé était de 300 g. On a utilisé 30, 60, 90 et 120 g d'urée, respectivement, et 12,94, 16,80, 21,67 et 27,22 g de solution de $H_3PO_4$ à 85 % respectivement.

On a mesuré les teneurs en glucose et urée libre initialement et au bout de 15, 30, 45, 60 et 120 minutes de réaction à 80 °C, pH : 2,5.

3

Les résultats sont récapitulés dans le Tableau II ci-après.

On voit que la proportion d'urée libre résiduelle demeure relativement constante lorsque la proportion d'urée incorporée passe de 10 à 40 % en poids. Dans tous les cas, elle demeure inférieure à 2 % en poids, voire inférieure à 1,5 % en poids.

## Exemple 3

Cet exemple illustre l'influence du pH sur la solubilité des sucres. On prépare deux produits selon l'invention contenant 20 % en poids d'urée, en suivant le mode opératoire général de l'Exemple 1, si ce n'est qu'on opère la réaction à 60 °C et qu'on ajoute 16,8 g de solution de $H_3PO_4$ à 85 % pour le premier produit et qu'on n'ajoute pas de $H_3PO_4$ pour le second produit. Les pH de départ sont de 2,5 et 4,4 respectivement.

Les résultats sont résumés dans le Tableau III ci-après.

On voit que la solubilité des sucres dépend du pH. Elle augmente avec le degré d'acidification. On opérera donc, de préférence, dans la zone de pH inférieure de la gamme indiquée, c'est-à-dire au-dessous de 3.

(Voir tableaux p. 5, 6, 7)

Tableau II

| t | UREE 10% (UREE/HEXOSES : 0,23) | | | | UREE 10% (UREE/HEXOSES : 0,46) | | | |
|---|---|---|---|---|---|---|---|---|
| | % glu | $X_g$ | % urée libre | $X_u$ | % glu | $X_g$ | % urée libre | $X_u$ |
| 0 | 18,90 | 0 | 8,75 | 0 | 17,16 | 0 | 15,92 | 0 |
| 15 | 9,64 | 0,49 | 1,34 | 0,85 | 3,81 | 0,78 | 1,37 | 0,91 |
| 30 | 9,90 | 0,48 | 1,39 | 0,84 | 4,04 | 0,76 | 1,45 | 0,91 |
| 45 | 8,86 | 0,53 | 1,26 | 0,86 | 4,11 | 0,76 | 1,43 | 0,91 |
| 1 h | 8,5 (est.) | 0,55 | 1,13 | 0,87 | 4,14 | 0,76 | 1,07 | 0,93 |
| 2 h | 8,13 | 0,57 | 1,09 | 0,88 | 3,72 | 0,78 | 1,55 | 0,90 |

$X_g$ : taux de consommation du glucose : $(S_o - S_t)/S_o$

$X_u$ : taux d'urée non libre $= \dfrac{U \text{ libre } o - U \text{ libre } t}{U \text{ libre } o}$

0 113 288

**Tableau II (Suite)**

| t | URÉE 30% (URÉE/HEXOSES : 0,70) | | | | URÉE 40% (URÉE/HEXOSES : 0,93) | | | |
|---|---|---|---|---|---|---|---|---|
| | % glu | $X_g$ | % urée | $X_u$ | % glu | $X_g$ | % urée | $X_u$ |
| 0 | 15,71 | 0 | 21,84 | 0 | 14,48 | 0 | 26,85 | 0 |
| 15 | 2,08 | 0,87 | 1,41 | 0,94 · | 0,95 | 0,93 | 1,23 | 0,95 |
| 30 | | | | | | | | |
| 45 | | | | | | | | |
| 1 h | 2,30 | 0,85 | 1,23 | 0,94 | 0,68 | 0,95 | 1,22 | 0,95 |
| 2 h | 2,13 | 0,86 | 1,39 | 0,94 | 0,64 | 0,96 | 1,05 | 0,96 |

$X_g$ : taux de consommation du glucose : $(So-St)/So$

$X_u$ : taux d'urée non libre $= \dfrac{U\ libre\ o - U\ libre\ t}{U\ libre\ o}$

Tableau III

| | pH : 2,5 | | | | pH : 4,4 | | | |
|---|---|---|---|---|---|---|---|---|
| | Glucose % en poids | $X_g$ % | Urée libre, % en poids | $X_u$ % | Glucose %, en poids | $X_g$ % | Urée libre, % en poids | $X_u$ % |
| t = 0 | 17,16 | 0 | 15,92 | 0 | 17,98 | 0 | 16,67 | 0 |
| 15 | 4,71 | 0,73 | 1,39 | 0,91 | 13,96 | 0,22 | 1,52 | 0,91 |
| 30 | 4,08 | 0,76 | 1,36 | 0,91 | 14,84 | 0,17 | 1,43 | 0,91 |
| 45 | 4,22 | 0,76 | 1,46 | 0,91 | 15,07 | 0,16 | 1,50 | 0,91 |
| 1 h | 4,63 | 0,73 | 1,42 | 0,91 | 13,84 | 0,23 | 1,50 | 0,91 |
| 2 h | 3,64 | 0,79 | 1,41 | 0,91 | 14,34 | 0,20 | 1,56 | 0,91 |
| | Homogène liquide | | | | présence d'un précipité/dosage sur surnageant liquide. | | | |

0 113 288

# 0 113 288

## Revendications

1. Produits pour l'alimentation de ruminants, caractérisés en ce qu'ils sont formés par réaction d'urée et d'une matière lactosée dont le lactose a été préalablement au moins partiellement hydrolysé en glucose et galactose, et en ce qu'ils contiennent moins de 2 % en poids d'urée libre.

2. Produits selon la revendication 1, caractérisés en ce qu'ils contiennent 5 à 40 % en poids d'urée.

3. Produits selon la revendication 2, caractérisés en ce qu'ils contiennent 15 à 30 % en poids d'urée.

4. Produits selon l'une quelconque des revendications 1 à 3, caractérisés en ce que la matière lactosée est un perméat de lactosérum ou un jus lactosé, dont le lactose a été préalablement au moins partiellement hydrolysé en glucose et galactose.

5. Produits selon l'une quelconque des revendications 1 à 4, caractérisés en ce que la matière lactosée a été au moins partiellement hydrolysée à l'aide de lactase ou β-galactosidase immobilisée.

6. Produits selon l'une quelconque des revendications 1 à 5, caractérisés en ce qu'ils contiennent, en outre, de l'acide phosphorique.

7. Produits selon la revendication 6, caractérisés en ce que la proportion de $H_3PO_4$ est comprise entre 2 et 7 % en poids par rapport au poids total du produit.

8. Procédé de préparation d'un produit selon la revendication 1, caractérisé en ce qu'il comprend les étapes suivantes : dissolution de l'urée dans la matière lactosée à lactose au moins partiellement hydrolysé, à une température de 50-90 °C, sous agitation ; si nécessaire, ajustement du pH dans la gamme de 2,5 à 4,5 par addition d'acide à la solution obtenue ; et chauffage de la solution acide résultante à une température de 50-90 °C, pendant un temps suffisant pour que la teneur du produit résultant en urée libre n'excède pas 2 % en poids.

9. Procédé selon la revendication 8, caractérisé en ce que l'ajustement du pH est effectué par addition d'acide phosphorique.

## Claims

1. Products for feeding ruminants characterized in that they are formed by reaction of urea with a lactose-containing material the lactose of which has previously been at least partially hydrolyzed to glucose and galactose, and in that they contain less than 2 % by weight of free urea.

2. Products as claimed in claim 1, characterized in that they contain 5 to 40 % by weight of urea.

3. Products as claimed in claim 2, characterized in that they contain 15 to 30 % by weight of urea.

4. Products as claimed in any of claims 1 to 3, characterized in that the lactose-containing material is a lactoserum permeate or a lactose-containing liquor, the lactose of which has been previously at least partially hydrolyzed to glucose and galactose.

5. Products as claimed in any of claims 1 to 4, characterized in that the lactose-containing material has been at least partially hydrolyzed with the aid of immobilized lactase or β-galactosidase.

6. Products as claimed in any of claims 1 to 5, characterized in that they additionally contain phosphoric acid.

7. Products as claimed in claim 6, characterized in that the proportion of $H_3PO_4$ is between 2 and 7 % by weight relative to the total weight of the product.

8. Process for preparing a product according to claim 1, characterized in that it comprises the following steps : dissolving urea in a lactose-containing material, the lactose of which has been at least partially hydrolyzed, at a temperature of 50-90 °C, with agitation ; adjusting the pH, if necessary, in the range from 2.5 to 4.5 by adding acid to the solution obtained ; and heating the resultant acid solution at a temperature of 50-90 °C for a time sufficient for the free urea content of the resulting product not to exceed 2 % by weight.

9. Process as claimed in claim 8, characterized in that the adjustement of the pH is produced by adding phosphoric acid.

## Patentansprüche

1. Produkte zum Füttern von Wiederkäuern, dadurch gekennzeichnet, daß sie durch Reaktion von Harnstoff mit einem Lactosematerial gebildet wurden, wobei die Lactose vorher mindestens teilweise zu Glucose und Galactose hydrolisiert worden ist, und daß die Produkte mindestens 2 Gew.-% freien Harnstoff enthalten.

2. Produkte nach Anspruch 1, dadurch gekennzeichnet, daß sie 5 bis 40 Gew.-% Harnstoff enthalten.

3. Produkte nach Anspruch 2, dadurch gekennzeichnet, daß sie 15 bis 30 Gew.-% Harnstoff enthalten.

4. Produkte nach einem der Ansprüche 1 bis 3, dadurch gekennzeichnet, daß das Lactosematerial ein Permeat von Milchserum oder einem Milchsaft ist, wobei die Lactose vorher mindestens teilweise zu Glucose und Galactose hydrolisiert worden ist.

5. Produkte nach einem der Ansprüche 1 bis 4, dadurch gekennzeichnet, daß das Lactosematerial mit Hilfe von Lactase oder immobilisierter β-Galactosidase mindestens teilweise hydrolisiert worden ist.

6. Produkte nach einem der Ansprüche 1 bis 5, dadurch gekennzeichnet, daß sie außerdem Phosphorsäure enthalten.

7. Produkte nach Anspruch 6, dadurch gekennzeichnet, daß der Anteil an $H_3PO_4$ zwischen 2 und 7 Gew.-%, bezogen auf das Gesamtgewicht des Produkts, beträgt.

8. Verfahren zum Herstellen eines Produkts nach Anspruch 1, dadurch gekennzeichnet, daß es die folgenden Schritte umfaßt : Auflösen von Harnstoff in dem Lactosematerial, bis die Lactose mindestens teilweise hydrolysiert ist, bei einer Temperatur von 50 bis 90 °C unter Rühren ; erforderlichenfalls Einstellen des pH-Werts innerhalb des Bereichs von 2,5 bis 4,5 durch Zugabe von Säure zur erhaltenen Lösung ; Erhitzen der resultierenden sauren Lösung auf eine Temperatur von 50 bis 90 °C während einer Zeit, die ausreicht, damit der Gehalt des gebildeten Produkts an freiem Harnstoff 2 Gew.-% nicht übersteigt.

9. Verfahren nach Anspruch 8, dadurch gekennzeichnet, daß das Einstellen des pH-Werts durch Zugabe von Phosphorsäure vorgenommen wird.